# EUROPÄISCHE PATENTSCHRIFT

(11) **EP 2 927 558 B1**
(45) Veröffentlichungstag und Bekanntmachung des Hinweises auf die Patenterteilung: **20.12.2017**
(21) Anmeldenummer: 14175290.7
(22) Anmeldetag: 01.07.2014
(51) Int. Cl.: F16P 1/02, B23Q 11/00

(54) **Sicherungsvorrichtung für das Durchschneiden eines Siegels, insbesondere eines Bolzensiegels sowie deren Verwendung**
Safety device for cutting a seal, in particular a bolt seal and use of same
Dispositif de sécurisation pour la découpe d'un sceau, notamment d'un scellé ainsi que son utilisation

(30) Priorität: 28.03.2014 DE 102014104427
(43) Veröffentlichungstag der Anmeldung: 07.10.2015
(73) Patentinhaber: Bednorz GmbH & Co. KG, 65451 Kelsterbach (DE)
(72) Erfinder: Koll, Thomas, 97941 Tauberbischofsheim-Hochhausen (DE)
(74) Vertreter: Pöhner, Wilfried Anton

(56) Entgegenhaltungen:
- FR-A1- 2 738 513
- US-A1- 2011 274 508
- US-A1- 2013 273 821
- US-B1- 8 465 594
- Bednorz: "Bednorz Sicherung K", , 27. Oktober 2014 (2014-10-27), XP002743762, Gefunden im Internet: URL:http://www.bednorz.com/sites/default/f iles/downloads/bednorz_sicherung_k_brochur ede_0.pdf [gefunden am 2015-08-26]

## Beschreibung

Die Erfindung betrifft die Schaffung einer Sicherungsvorrichtung für das Durchschneiden eines Siegels, insbesondere eines Bolzensiegels umfassend zwei Befestigungsköpfe, die so bemessen sind, dass sie von jeweils einer Stirnseite her an den Enden des Bolzensiegel lösbar befestigbar sind und im befestigten Zustand einen Abstand voneinander aufweisen sowie deren Verwendung beim Durchschneiden des Siegels.

Plomben werden als Siegel für Behälter und Gehäuse eingesetzt und haben vor allem im Zollwesen weite Verbreitung gefunden. Durch die Anbringung einer Plombe am Verschluss eines Behälters oder Gerätes wird sichergestellt und nachprüfbar, ob der Behälter oder das Gerät geöffnet wurde. Das Entfernen von Plomben durch Unbefugte wird als Urkundenvernichtung im strafrechtlichen Sinne verfolgt.

In ihrem klassischen Aufbau weisen die Plomben aus deformierbaren Materialien zum Beispiel Blei gebildeten Scheiben auf, in denen eine Bohrung radial eingebracht ist, durch die der Plombierdraht geführt und anschließend die Scheibe mit der Plombierzange zusammengedrückt wird, um auf diese Weise den Plombierdraht unverschiebbar einzuklemmen und gleichzeitig auf den Stirnflächen der Plombe den Prüfstempel aufzubringen. In jüngster Zeit werden die Plomben durch Klebeetiketten ersetzt, deren Materialien und Aufbau so gewählt sind, dass die Plombe ohne Zerstörung der Siegelmarke nicht entfernt werden kann. Bei Raumverschlüssen, wie sie bei Containern eingesetzt werden, wird der Verschluss über einen Bolzensiegel gesichert, der seinerseits aus einem Stahlkern und einen diesen umgebenden Kunststoffmantel besteht, der mit einer Identifikationsnummer versehen ist. Das Öffnen erfolgt in der Weise, dass der Bolzen mithilfe eines Bolzenschneiders durchtrennt wird, dass also der Bolzen in die zweiteilige Form überführt wird und hierbei der Verschluss freigegeben wird. Die beiden nach dem Durchtrennen des Bozens bzw. Stiftes entstehenden Teile werden im Rahmen der Erfindung als Fragmente bezeichnet.

Beim Zertrennen des Bolzensiegels ergibt sich das Problem, dass die beiden hierbei entstehenden Fragmente des Siegels in nicht abschätzbaren Richtungen und mit vergleichbaren hohen Geschwindigkeiten mit Reichweiten bis zu 5 Metern nach Art eines Stahlgeschosses umherfliegen.
Die hierdurch bedingten Nachteile sind erheblich: Einzelne der Fragmente können als Bruchstücke Anlass zu Personenschäden geben und zum Beispiel der die Arbeit durchführende Person aber auch das umgebende Personal gefährden sowie darüber hinaus zu Sachschäden führen, da die Bruchstücke an Fahrzeugen und insbesondere Reifen in der Nachbarschaft auftreffen können. Weiter ist als Nachteil zu sehen, dass die Bruchstücke des Bolzensiegels in einem großen Radius verteilt herumliegen und entweder mühselig aufgesammelt werden müssen oder aufgrund ihres scharfkantigen Aufbaues Anlass zu Beschädigungen von Reifen und dergleichen geben.
Als einzige Möglichkeit hier Abhilfe zu schaffen ist bekannt, dass man die Plomben vor dem Zertrennen und entsprechend der späteren Schnittfläche des Bolzenschneiders mit einer Abdeckung versieht. Diese Methode ist sehr zeitaufwendig und führt zu unbefriedigten Ergebnissen, weshalb sie in der Praxis keinen Eingang gefunden hat.

Aus dem Bereich der Tiefseekabelbearbeitung sind durch die Patentschrift FR 2 738 513 Sicherungsscheiben bekannt, die vor dem Durchtrennen eines Kabels, bei dem einzelne, unter großer Spannung stehende, Kabelstränge peitschenartig zurückschnellen und ebenso wie umherfliegende Plombenfragmente in der Nähe befindliche Personen verletzen können, paarweise vor und hinter der Trennstelle angebracht werden, so dass sie alle Kabelstränge fest umfassen und am Zurückschnellen nach dem Durchtrennen hindern. Diese lösen jedoch nicht vorliegendes Problem, denn zum einen sind sie aufgrund ihrer Geometrie nicht zur Verwendung bei Sicherungsplomben geeignet, welche üblicherweise sehr nahe oder unmittelbar an der Wand eines Containers oder anderen gesicherten Behältnisses angebracht sind, und zum anderen wäre selbst wenn ein Anbringen möglich wäre ein Auseinanderfliegen und Herabfallen der Plombenfragmente nicht wirksam verhindert.

Hiervon ausgehend hat sich die Erfindung die Schaffung einer Vorrichtung zur Aufgabe gemacht, die bei zügiger Handhabung und Bedienung die Bruchstücke des Bolzensiegels nach dem Zertrennen vordem unkontrollierten Absprengen sichert und festhält.

Gelöst wird diese Aufgabe durch eine Sicherungsvorrichtung mit den im Anspruch 1 angegebenen Merkmalen.

Die vorgeschlagene Sicherungsvorrichtung besteht in ihrem grundsätzlichen Aufbau aus zwei Befestigungsköpfen, die derart gestaltet sind, dass sie von der Stirnseite her an jeweils einem Ende des Bolzensiegels lösbar befestigt werden können. Dabei weisen die Befestigungsköpfe im auf dem Bolzensiegel befestigten Zustand einen hinreichenden Abstand auf, der es erlaubt mit einem Bolzenschneider zwischen den beiden Köpfen einzufahren und somit die Möglichkeit zum Durchtrennen des Bolzenstiftes zu eröffnen. Durch diese Maßnahme ist sichergestellt, dass auch während des Zertrennvorgangs beide Befestigungsköpfe auf den Enden des Bolzensiegels verbleiben, mit dem Ergebnis, dass die Verbindung zwischen Befestigungskopf und Bolzensiegel während und auch nach dem Zertrennen bestehen bleibt. Die Befestigung des Befestigungskopfs auf dem Bolzensiegel hat mit einer solchen Kraft zu erfolgen, dass während des Zertrennvorgangs die Verbindung erhalten bleibt.
Nach einem weiteren Merkmal sind die beiden Befestigungsköpfe durch eine lösbare Verbindung miteinander in Verbindung gesetzt. In der Regel wird man hierfür ein Kabel, Drähte, Ketten oder dergleichen vorsehen, also Verbindungen, die sich zusammenrollen oder zusammenfalten lassen um den Transport der Sicherungsvorrichtung auf kleinstem Raum zu gestatten. Somit macht es dem Benutzer kein Problem, die Sicherungsvorrichtung zum Beispiel in seiner Tasche auf den Weg zum Arbeitsort mitzuführen. Die wesentliche Funktion der Verbindung besteht darin, dass insbesondere auch nach dem Zertrennen des Bolzensiegels die beiden hierdurch entstehenden Bolzenfragmente nach wie vor räumlich in Verbindung stehen. Es ist auf diese Weise sichergestellt, dass beide Fragmente nicht völlig unberechenbar und unkontrolliert durch die Gegend "schießen" sondern stets zusammengehalten werden und nur dann eine räumliche Bewegung stattfindet, wenn sich die Geschwindigkeitsvektoren der beiden Fragmenten zu einer von Null abweichenden Resultierenden addieren. In der Regel wird aufgrund der im Hinblick auf die Geschwindigkeiten als auch die Richtungen und somit statistisch verteilten Geschwindigkeitsvektoren eine doch weitgehende Kompensation stattfinden, so dass die Gefahr bereits weitgehend reduziert oder gar vollständig beseitigt wurde.

Um dies allerdings sicherzustellen ist eine räumliche Fixierung der Verbindung der beiden Befestigungsköpfe in der Weise vorgesehen, dass für das Verbindungskabel ein zusätzliches bauliches Mittel vorgesehen ist, das eine lösbare Befestigung am Container möglich macht. Besonders bevorzugt ist hier die Verwendung eines Magneten. Diese Maßnahme stellt sicher, dass der (mögliche) Bewegungsraum der beiden Befestigungsköpfe mit ihren Bolzenschneiderfragmenten nur auf ein enges Volumen begrenzt wird, das durch die Länge der Verbindung beiden Befestigungsköpfe bestimmt wird.

Die Anbringung jedes Befestigungskopfes an der Stirnseite des Bozens erfolgt nicht nur lösbar sondern sollte, um die Durchführung der vorzunehmenden Arbeit zeitlich möglichst kurz zu gestalten, rasch vorgenommen werden können. Aus diesem Grund wird empfohlen, die Befestigung über Klemmvorrichtungen, Rastfederverbindungen und/oder Magnete zu realisieren. Selbstredend ist die Verbindung derart auszulegen, dass die beim Einsatz des Bolzenschneiders auftretenden Kräfte die Haltekräfte des Befestigungskopfs am Bolzen nicht überschritten werden sondern, dass das Fragment sicher durch den Befestigungskopf festgehalten wird. Sowohl vor als auch nach dem Zertrennen des Bolzensiegels beschreiben die beiden, dann die Fragmente bildenden Enden mit ihrem jeweiligen Befestigungskopf ein einstückiges Gebilde.

Erfindungsgemäß ist der Befestigungskopf derart geformt, dass er nach Art einer Kappe die Enden des Bolzens umgreift. Zu diesem Zweck ist der Randbereich des Befestigungskopfes
nach Art eines Kegelstumpfes nach aussen zu geöffnet und beschreibt einen offenen Trichter, der eine Führung bildet und das Aufsteckens des Befestigungskopfes auf das Bolzensiegel erleichtert.

Die Verwendung der erfindungsgemäßen Sicherungsvorrichtung geschieht auf folgende Weise:
Zunächst wird jeweils ein Befestigungskopf von der Stirnseite her auf jeweils ein Ende des Bolzensiegels aufgebracht und dort befestigt.

Die lichte Weite zwischen den beiden Befestigungsköpfen ist durch deren Abstand so gewählt, dass ein Eingriff eines Bolzenschneiders üblicher Abmessungen in den hierdurch beschriebenen Zwischenraum ohne Weiteres ermöglicht wird, so dass nach dem Aufsetzen auf den Bolzen und Betätigen des Bolzenschneiders die beiden Fragmente entstehen. Aufgrund der Verbindung zwischen den beiden Befestigungsköpfen werden die Fragmente daran gehindert auf unkontrollierte Weise durch die Umgebung "zu schießen". Dies gilt insbesondere dann, wenn die Verbindung zwischen den Befestigungsköpfen entsprechend einer Weiterbildung am Container selbst (vorübergehend) fixiert sind. Nach dem Zertrennen des Bolzens werden also mithilfe der Sicherungsvorrichtung die beiden Fragmente des Bolzens unmittelbar präsentiert und können problemlos eingesammelt werden.

Die grundlegenden Vorzüge der Sicherungsvorrichtung bestehen darin, dass die Sicherheit wesentlich erhöht wird, indem ausgeschlossen ist, dass die Fragmente auf unkontrollierte Weise in die Umgebung "schießen" und dass zudem das Einsammeln der Fragmente auf einfachster Weise möglich wird.

Weitere Einzelheiten, Merkmale und Vorteile der Erfindung lassen sich demnach folgenden Beschreibungsteil entnehmen, in dem anhand der Zeichnung ein Ausführungsbeispiel der Erfindung näher erläutert wird.

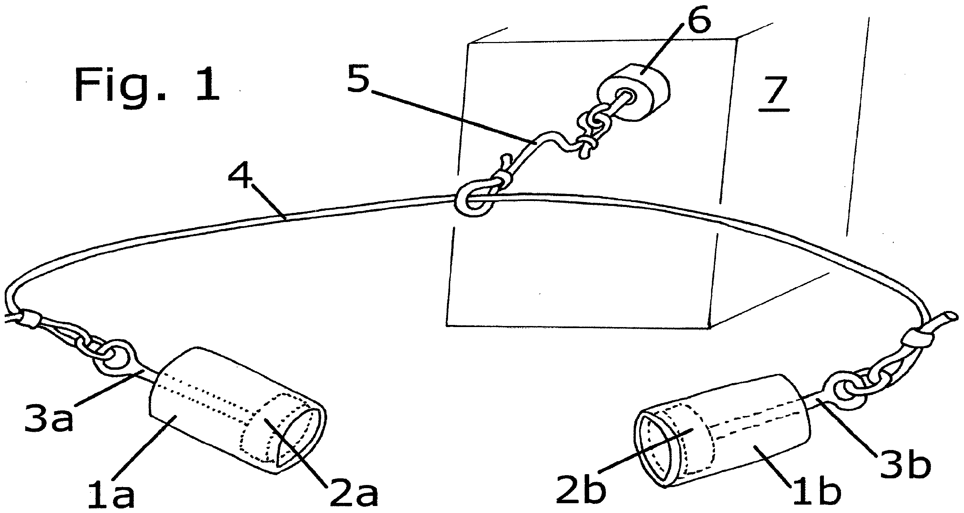

Figur 1 zeigt in schematisch gehaltener Darstellung einer Seitenansicht der erfindungsgemäßen Sicherungsvorrichtung.

Die Sicherungsvorrichtung besteht in ihrem grundsätzlichen Aufbau aus zwei Befestigungsköpfen 1a und 1b, die nach Art eines stirnseitig offenen Hohlzylinders geformt sind. In ihrem Inneren und axial von der Stirnseite nach innen zu versetzt findet sich jeweils ein der lösbaren Befestigung dienender Magnet 2a, 2b. An ihrer gegenüberliegenden Stirnfläche ist jeder Befestigungskopf 1 über einen Stift 3a, 3b an demselben Verbindungskabel 4 befestigt. Die Befestigungsköpfe 1 sind derart dimensioniert, dass sie von der Stirnseite her auf jeweils einem Ende des Bolzensiegels aufgebracht und über magnetische Kräfte fixiert werden können. Man erhält eine Anordnung, die zu einer senkrecht zur Zeichnung verlaufenden Ebene Spiegelsymmetrie aufweist.

In der gezeigten Ausführungsform ist das Verbindungskabel 4 seinerseits mit einer Fixierung 5 versehen, die in der gezeigten Darstellung aus einem mit dem Kabel 4 in Verbindung stehenden Magneten 6 gebildet wird. Mithilfe des Magneten 6 wird die Fixierung 5 mit ihrem einen Ende an einer magnetisierbaren Stahlplatte 7 festgelegt, die beispielsweise durch die Wandung des Containers gebildet werden kann. Die Fixierung 5 stellt sicher, dass sich während jeder Phase des Arbeitens die Befestigungsköpfe mit den daran fixierten Fragmenten des Bolzensiegels zwangsweise in einem räumlich eng definierten Bereich befinden müssen. Eine Gefährdung der Umgebung durch herumfliegende Bolzenfragmente ist dann ausgeschlossen und darüber hinaus ist das Einsammeln der Fragmente rasch und einfach möglich. Die bisher vorhandene Gefährdung von Personen und/oder Fahrzeugen ist durch die Verwendung der erfindungsgemäßen Sicherungsvorrichtung ausgeschlossen.
Gleichzeitig wird eine emotionale Anspannung der bolzendurchtrennenden Person vermieden.

### Bezugszeichenliste

- 1a, 1b: Befestigungskopf
- 2a, 2b: Magnet
- 3a, 3b: Stift
- 4: Verbindungskabel
- 5: Fixierung
- 6: Fixiermagnet
- 7: Stahlplatte

## Patentansprüche

1. Sicherungsvorrichtung für das Durchschneiden eines Siegels, insbesondere eines Bolzensiegels, umfassend zwei Befestigungsköpfe (1), die so bemessen sind, dass sie von jeweils einer Stirnseite her an den Enden des Bolzensiegel lösbar befestigbar sind, wobei die Befestigungsköpfe (1) im befestigten Zustand einen Abstand voneinander aufweisen, und wobei zwischen den Befestigungsköpfen (1) eine Verbindung (4) angebracht ist,
**dadurch gekennzeichnet, dass**
der Befestigungskopf (1) nach Art eines stirnseitig offenen Hohlzylinders geformt ist, und er nach Art einer Kappe die Enden des Bolzens umgreifen kann.

2. Sicherungsvorrichtung nach Anspruch 1, **dadurch gekennzeichnet, dass** die Verbindung (4) als Draht und/oder als Kabel und/oder als Kette ausgebildet ist.

3. Sicherungsvorrichtung nach einem der vorhergehenden Ansprüche, **dadurch gekennzeichnet, dass** die Verbindung (4) mit einer zur Herstellung einer lösbaren Befestigung geeigneten Fixierung (5), insbesondere einem Magneten, versehen ist.

4. Sicherungsvorrichtung nach einem der vorhergehenden Ansprüche, **dadurch gekennzeichnet, dass** die lösbare Befestigung zwischen Befestigungskopf (1) und Bolzensiegel als Klemmvorrichtung und/oder als Federelement und/oder magnetisch ausgebildet ist.

5. Verwendung der Sicherungsvorrichtung nach einem der vorhergehenden Ansprüche, **dadurch gekennzeichnet, dass**
an beiden Enden des Bolzensiegels jeweils ein Befestigungskopf (1) lösbar befestigt wird,
dass in dem Raum zwischen den beiden Befestigungsköpfe (1) ein Bolzenschneider eingeführt wird,
dass durch Betätigen des Bolzenschneiders das Bolzensiegel in Fragmente getrennt wird und
die Fragmente des Bolzenschneiders aus den Befestigungsköpfen (1) entfernt werden.

6. Verwendung der Sicherungsvorrichtung nach Anspruch 6,
**dadurch gekennzeichnet, dass**
vor oder nach dem Befestigen des Befestigungsköpfe (1) das Verbindungskabel (4) über die Fixierung (5) räumlich festgelegt wird,
und dass vor oder nach dem Entfernen der Fragmente aus den Befestigungsköpfen (1) schließlich die Fixierung (5) gelöst wird.

7. Verwendung der Sicherungsvorrichtung nach Anspruch 6 oder 7, **dadurch gekennzeichnet, dass**
die Fixierung (5) an den Wandungen eines Containers festgelegt wird.

## Claims

1. Securing device for cutting through a seal, in particular a bolt seal, comprising two fastening heads (1), which are dimensioned such that they can be detachably fastened from one end face in each case to the ends of the bolt seal, the fastening heads (1), in the fixed state, having a spacing from one another, and a connection (4) being attached between the fastening heads (1)
**characterised in that**
the fastening head (1) is formed such that it encompasses the ends of the bolt in the manner of cap.

2. Securing device according to claim 1, **characterised in that** the connection (4) is designed as a wire and/or as a cable and/or as a chain.

3. Securing device according to one of the preceding claims, **characterised in that** the connection (4) is provided with a fixing means (5), in particular a magnet, which is suitable for producing a detachable fastening.

4. Securing device according to one of the preceding claims, **characterised in that** the detachable fastening between the fastening head (1) and bolt seal is designed as a clamping device and/or as a spring element and/or is of magnetic design.

5. Use of the securing device according to one of the preceding claims, **characterised in that** a fastening head (1) in each case can be detachably fastened at both ends of the bolt seal, **in that**, in the space between the two fastening heads (1), a bolt cutter is introduced, **in that**, by actuation of the bolt cutter, the bolt seal is cut into fragments, and
the fragments of the bolt cutter are removed from the fastening heads (1).

6. Use of the securing device according to claim 6, **characterised in that** before or after the fastening of the fastening heads (1), the connecting cable (4) is spatially fixed by means of the fixing means (5), and **in that**, before or after the removal of the fragments from the fastening heads (1), the fixing means (5) is ultimately released.

7. Use of the securing device according to claim 6 or 7,
**characterised in that**
the fixing means (5) is fixed on the walls of a container.

## Revendications

1. Dispositif de fixation destiné à trancher un sceau, notamment un sceau à boulon, comprenant deux têtes de fixation (1), qui sont dimensionnées de façon à pouvoir être détachées aux extrémités du sceau à boulon depuis chacune des faces, sachant que les têtes de fixation présentent une fois fixées une certaine distance l'une par rapport à l'autre, sachant qu'une liaison (4) est placée entre les têtes de fixation (1),
**caractérisé par le fait que**
la tête de fixation (1) est formée de façon à entourer les extrémités du boulon à la manière d'un capuchon.

2. Dispositif de fixation selon la revendication 1, **caractérisé par le fait que** la liaison (4) prend la forme d'un fil et/ou d'un câble et/ou d'une chaîne.

3. Dispositif de fixation selon une des revendications précédentes, **caractérisé par le fait que** la liaison (4) est pourvue d'une fixation (5) capable d'établir une fixation détachable, notamment d'un aimant.

4. Dispositif de fixation une des revendications précédentes, **caractérisé par le fait que** la fixation détachable entre la tête de fixation (1) et le sceau à boulon a la forme d'un dispositif de serrage et/ou d'un élément de ressort et/ou est aimanté.

5. Utilisation du dispositif de fixation selon une des revendications précédentes, **caractérisée par le fait qu'**une tête de fixation (1) est fixée de façon détachable sur chacune des deux extrémités du sceau à boulon,
qu'un coupe-boulon est introduit dans l'espace situé entre les deux têtes de fixation (1),
que le sceau à boulon est séparé en fragments lorsqu'on actionne le coupe-boulon et
que les fragments du coupe-boulon sont retirés des têtes de fixation (1).

6. Utilisation du dispositif de fixation selon la revendication 6,
**caractérisé par le fait que** le câble de liaison (4) est fixé dans l'espace via la fixation (5) avant ou après la fixation des têtes de fixation (1),
et que la fixation (5) est finalement détachée avant ou après l'enlèvement des fragments hors des têtes de fixation (1).

7. Dispositif de fixation selon la revendication 6 ou la revendication 7,
**caractérisé par le fait que** la fixation (5) est fixée sur les parois d'un conteneur.
